# EUROPEAN PATENT SPECIFICATION

(11) **EP 4 602 005 B1**
(45) Date of publication and mention of the grant of the patent: **25.11.2026**
(21) Application number: 23786584.5
(22) Date of filing: 11.10.2023
(51) Int. Cl.: C03B 33/02, B23K 26/067, B23K 26/08, C03B 33/09, B23K 26/06, B23K 26/364, B23K 26/402, B23K 37/04, B23K 26/38

(54) **LASER CUTTING MACHINE FOR CUTTING GLASS SHEETS**
LASERSCHNEIDMASCHINE ZUM SCHNEIDEN VON GLASSCHEIBEN
MACHINE DE DÉCOUPE LASER POUR DÉCOUPER DES FEUILLES DE VERRE

(30) Priority: 14.10.2022 IT 202200021186
(43) Date of publication of application: 20.08.2025
(73) Proprietor: Glass Company S.r.l., 61122 Pesaro (PU) (IT)
(72) Inventor: BERNABUCCI, Claudio, 61122 PESARO (PU) (IT)
(74) Representative: Benedetti, Gianluca
(86) International application number: PCT/EP2023/078147
(87) International publication number: WO 2024/079172

(56) References cited:
- WO-A1-2014/115985
- US-A1- 2015 136 743
- US-A1- 2016 318 790

## Description

### DETAILED DESCRIPTION

### Field of the art and identification of the technical problem

The present invention relates to the field of glass cutting machines.

Machines for cutting glass sheets which use waterjet, as cutting technology, are known.

This cold cutting technology uses an ultra-high pressure waterjet for cutting various types of materials, including glass.

At times, in order to increase the cutting power, an abrasive powder, such as for example sand, is added to the water.

Furthermore, machines provided with laser technology are used to cut glass.

For example there are known machines comprising a work surface for placing workpieces to be cut, a source of laser beams arranged in a fixed position located outside the vertical overall dimensions of the work surface, and a movable focal on a parallel plane, and arranged above the work plane and designed to intercept the laser beam emitted by such source and direct it towards the workpiece to carry out the cutting thereof.

However, this particular type of machines does not allow to carry out the cutting operations in curved glasses, but only in flat glasses.

Furthermore, laser cutting machines currently available on the market allow to carry out, on the glass sheets being processed, only orthogonal cuts with respect to the work surface.

Should one instead intend to cut a glass sheet according to an inclined cutting surface with respect thereto, normal cutting of the glass workpiece is usually followed by a subsequent grinding processing so as to progressively polish the sharp corners of the workpiece until an oblique surface is obtained.

This *modus operandi* clearly entails rather long processing times, with obvious disadvantages in terms of productivity of the entire production process.

Besides this, there should also be observed the fact that the oblique surfaces obtained according to this operating mode often have an inadequate or scarce degree of precision, due to inherent technological limitations of the grinding machines.

An embodiment according to the prior art is disclosed by WO2014115985A1.

### Objects of the invention

Therefore, in the context outlined above, the main object of the present invention is to provide a laser cutting machine for cutting glass sheets.

Another object of the present invention is to provide a laser cutting machine which allows to carry out inclined cutting operations with a significant level of precision.

A further object of the present invention is to provide a laser cutting machine which allows to rapidly carry out inclined cutting operations on the glass sheets to be processed.

Another object of the present invention is to provide a laser cutting machine for cutting glass sheets, that is safe and reliable in the relative operation.

A further object of the present invention is to provide a laser cutting machine for cutting glass sheets, which has a simple or non-complex structure.

Another object of the present invention is to provide a laser cutting machine for cutting glass sheets, which has a relatively low cost with respect to the income that can be basically achieved with it.

### Summary of the solution concept

These and other objects are all achieved with a laser cutting machine for cutting glass sheets, comprising: a work surface on which at least one glass sheet to be cut is placed; at least one laser generator for generating a first laser beam for engraving on said at least one glass sheet and a second laser beam for carrying out a through cut in said at least one glass sheet at said engraving; wherein said at least one laser generator is movable according to three orthogonal cartesian axes above said work surface, so that said at least one laser generator is displaced above said work surface, the first laser beam and the second laser beam obtain, jointly, at least one cutting in said at least one glass sheet; at least three linear actuators directly or indirectly acting on said at least one laser generator and operating according to a respective movement axis substantially orthogonal to said work surface, so that varying the extension of said at least three linear actuators along the respective movement axis, varies the inclination of said at least one laser generator and said first laser beam and second laser beam with respect to said work surface, therefore allowing - in use - the first laser beam and the second laser beam to jointly obtain at least one cut in said at least one glass sheet according to cutting surface oblique to said work surface.

Preferred embodiments of the present invention are defined in the dependent claims that follow.

### Description of the attached drawings

Further characteristics and advantages of the laser cutting machine for cutting glass sheets according to the present invention, will be more apparent from the following detailed description of a preferred but non-exclusive embodiment thereof, represented solely by way of non-limiting example in the attached drawings, wherein:

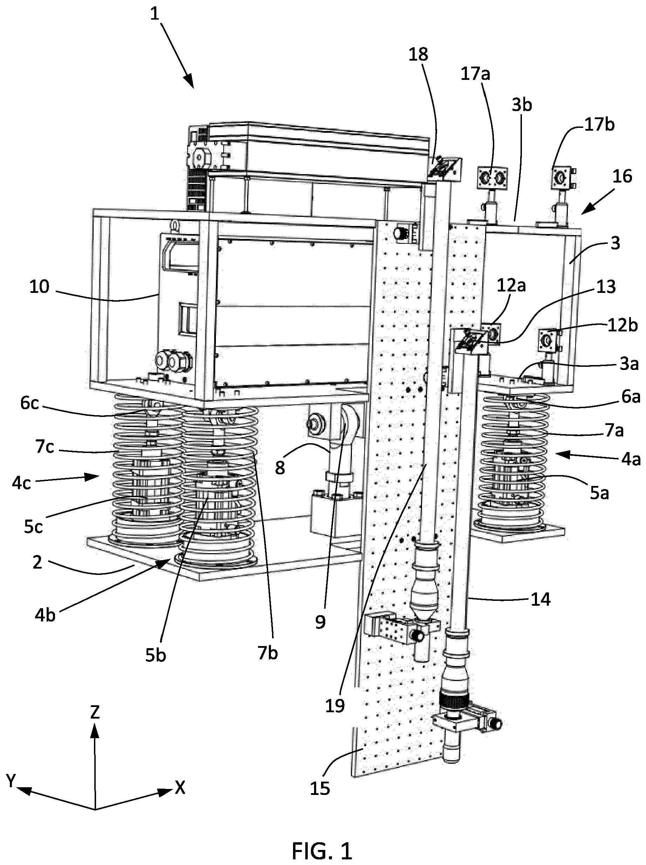

Figure 1 is a first perspective view of an operating unit of a laser cutting machine for cutting glass sheets according to the present invention;

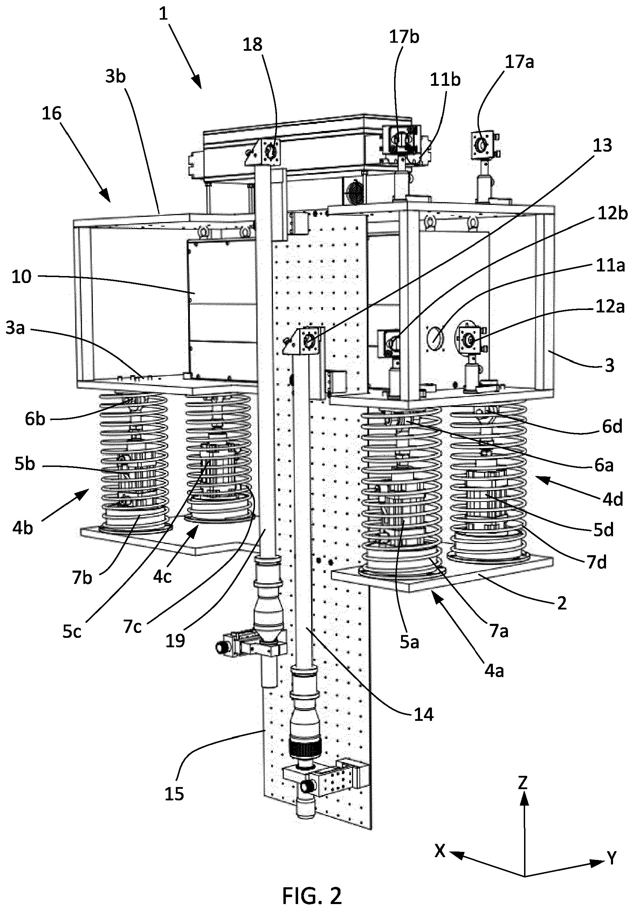

Figure 2 is a second perspective view of the operating unit shown in Figure 1;

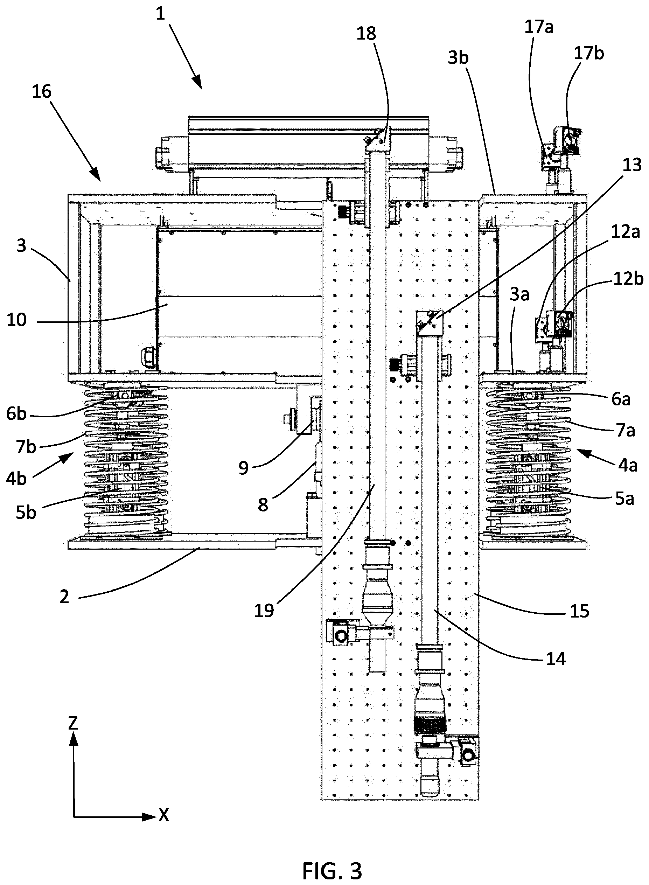

Figure 3 is a lateral view of the operating unit shown in the Figures 1 and 2;

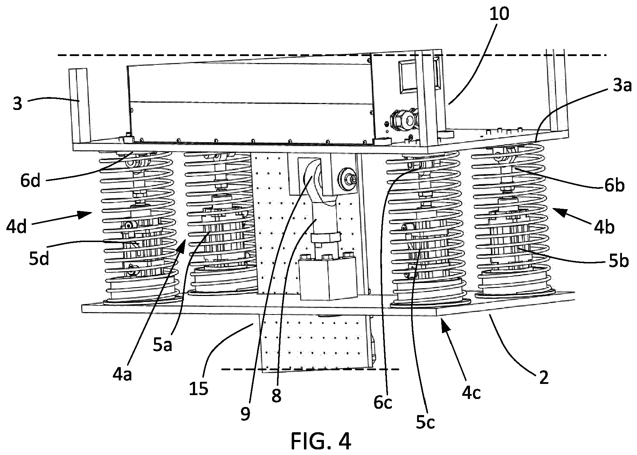

Figure 4 is a detailed perspective view of the operating unit according to Figures 1, 2 and 3.

### Static description of the embodiment

With reference to the attached figures, an operating unit of a laser cutting machine (not shown), according to the present invention, for cutting flat or curved glass sheets, is indicated in its entirety with 1.

The aforementioned laser cutting machine further comprises a base (not shown) on which there is defined a work surface (not shown) configured to allow the positioning and locking, through appropriate fixing means, of the glass sheets to be processed.

A movable portal (not shown) on which there is movably mounted - with respect to the portal - such operating unit 1 along a second axis Y orthogonal to said first axis X is enabled to move above the work surface, according to a first axis X parallel to said first axis X.

The operating unit 1 is also movable along a third vertical axis Z, orthogonal to the first X and to the second Y axis, to allow it to be positioned above glasses to be cut, should the latter be curve-shaped.

The operating unit 1 is therefore also arranged above the work surface.

Specifically, the operating unit 1 comprises a support plate 2, with rectangular overall dimensions, oriented parallel to the work surface and movably connected to the aforementioned along the second axis Y and along the third axis Z.

The operating unit 1 further includes a double-deck frame 3 in which there are defined two parallel planes, specifically a lower plane 3a and an upper plane 3b arranged above said lower plane 3a.

The support plate 2 and the double-deck frame 3 are mutually connected through four movement devices 4a, 4b, 4c, 4d.

In particular, each of the aforementioned movement devices 4a, 4b, 4c, 4d comprises a respective linear actuator 5a, 5b, 5c, 5d operating according to a relative vertical trajectory (i.e. according to a respective trajectory parallel to the aforementioned third axis Z) between a maximum lowering position and a maximum lifting position.

Preferably, the aforementioned linear actuators 5a, 5b, 5c, 5d are arranged at the corners of a rectangle or of a square.

The aforementioned linear actuators 5a, 5b, 5c, 5d may be actually reduced to three.

Furthermore, each linear actuator 5a, 5b, 5c, 5d carries, at the top part, a respective ball joint 6a, 6b, 6c, 6d, or an equivalent connection member, so as to allow a rotation in the space (that is substantially around a point) of the double-deck frame 3 with respect to each linear actuator 5a, 5b, 5c, 5d.

Therefore, the double-deck frame 3 can be oscillated, with respect to the support plate 2 and to the work surface, for example around an axis or a point, preferably around a fixed point, through suitable lifting or lowering movements carried out by the four linear actuators 5a, 5b, 5c, 5d, .

Each linear actuator 5a, 5b, 5c, 5d is operatively connected to a control unit (not shown) adapted to control the operation thereof, or the vertical movement, so as to determine the mutual positioning between the double-deck frame 3 and the support plate 2 and, as a result, even between the double-deck frame 3 and the aforementioned work surface and the glass sheets arranged therein.

With each linear actuator 5a, 5b, 5c, 5d there may be associated a respective spring 7a, 7b, 7c, 7d operating both by compression and by traction and arranged so as to contain the relative linear actuator 5a, 5b, 5c, 5d therein.

Between the support plate 2 and the double-deck frame 3 there may be optionally provided for, in a central position corresponding to the oscillation point of the double-deck frame 3, a central support member 8 for supporting at least one part of the load of the double-deck frame 3 and of the members connected thereto.

The central support member 8 is provided - at the lower part - with a damping system operating in the vertical direction and it carries, at the top part, a ball joint 9 so as to allow the rotation of the double-deck frame 3 in the space with respect to said central support member 8.

A laser generator 10 provided with lower outlet 11a for the emission of a first laser beam and an upper outlet 11b for the emission of a second laser beam, is arranged on the double-deck frame 3.

On the lower plane 3a of the double-deck frame 3 there is present a lower optical consisting of a plurality of horizontal deviation lower mirrors 12a, 12b to deviate, horizontally (or better, on a plane parallel to the lower plane 3a and to the upper plane 3b of the double-deck frame 3), the aforementioned first laser beam emitted by the laser generator 10 towards a peripheral area of the double-deck frame 3 where there is arranged a vertical deviation lower mirror 13 - which is also part of said lower optical - arranged and configured so as to receive such first laser beam from the horizontal deviation lower mirror 12b closest thereto and deviate it by 90° downwards, or orthogonally to the lower plane 3a and to the upper plane 3b of the double-deck frame 3.

A first straight tubular element 14, oriented orthogonally to the lower plane 3a and to the upper plane 3b of the double-deck frame 3 is also provided for below the vertical deviation lower mirror 13.

Such first tubular element 14 is rigidly connected to a vertical support plate 15 in turn fixed to the double-deck frame 3 according to an orientation orthogonal to the lower plane 3a and to the upper plane 3b of the latter; said double-deck frame 3 and vertical support plate 15 jointly forming a support structure 16.

Within the first tubular element 14 there are present an upper lens and a lower lens, not shown in the figures attached hereto and movable one with respect to the other along the development trajectory of the first tubular element 14, so as to adjust the concentration of the laser beam exiting from the latter and the size of the spot, that is the area of contact of such laser beam with the underlying glass sheet to be processed.

Therefore, as a result, the aforementioned first laser beam emitted by the laser generator 10 is reflected, initially, by the plurality of horizontal deviation lower mirrors 12a, 12b and then by the vertical deviation lower mirror 13, before passing through both lenses arranged in the first tubular element 14 and protrude from the latter according to a direction substantially parallel to the orientation of the first tubular element 14.

Similarly, on the upper plane 3b of the double-deck frame 3 there is present an upper optical consisting of a plurality of horizontal deviation upper mirrors 17a, 17b to deviate, horizontally (or better, on a plane parallel to the lower plane 3a and to the upper plane 3b of the double-deck frame 3), the aforementioned second laser beam emitted by the laser generator 10 towards a peripheral area of the double-deck frame 3 where there is arranged a vertical deviation upper mirror 18 - which is also part of said upper optical - arranged and configured so as to receive such second laser beam from the horizontal deviation upper mirror 17b closest thereto and deviate it by 90° downwards, or orthogonally to the lower plane 3a and to the upper plane 3b of the double-deck frame 3.

Below the vertical deviation upper mirror 18 there is also provided for a second straight tubular element 19 oriented parallel to the first tubular element 14 and also rigidly connected to the vertical support plate 15.

Likewise, within the second tubular element 19 there are present an upper lens and a lower lens, not shown in the figures attached hereto and movable one with respect to the other along the development trajectory of the second tubular element 19, so as to adjust the concentration of the laser beam exiting from the latter and the size of the spot, that is the area of contact of such laser beam with the underlying glass sheet to be processed.

Therefore, the aforementioned second laser beam emitted by the laser generator 10 is reflected, initially, by the plurality of horizontal deviation upper mirrors 17a, 17b and then by the vertical deviation upper mirror 18, before passing through both lenses arranged inside the second tubular element 19 and protrude from the latter according to a direction substantially parallel to the orientation of the second tubular element 19.

### Dynamic description of the embodiment

Thus, having completed the static description of preferred embodiments of the laser cutting machine for cutting glass sheets according to the present invention, below is the dynamic description, or the relative operation.

In order to carry out inclined cutting operations in a glass sheet using the laser cutting machine described above, firstly one has to immobilise such sheet on the aforementioned work surface.

Furthermore, the operating unit 1 has to be suitably positioned on the plane X-Y (i.e. On the plane defined by the first X and by the second Y axis) and according to the third axis Z, and adjust the inclination thereof by acting on the linear actuators 5a, 5b, 5c, 5d, that is by moving each one of them to lift or lower it until it is oriented according to the cutting plane provided for by the work schedule that is the plane according to which the glass sheet is intended to be cut.

Therefore, activating the laser generator 10 and moving the operating unit 1 - previously inclined as a function of the geometry of the cutting to be performed - on the plane X-Y according to the cutting trajectory provided for by the work schedule, results in obtaining the first laser beam exiting from the first tubular element 14 progressively engraving the upper face of the glass sheet according to the displacement direction of the operating unit 1 on the plane X-Y, forming a very small groove thereon, and the second laser beam exiting from the second tubular element 19, impacting on such groove, fully cuts the glass sheet according to an inclined cutting plane, therefore obtaining - on said sheet - an inclined cut, for example a through inclined cut.

In order for the aforementioned to occur, the operating unit 1 should in particular be translated on the plane X-Y according to a direction parallel to the line alongside the projections, on the work surface, the laser beams exiting from the first tubular element 14 and from the second tubular element 19.

As regards potential through cuts using the laser cutting machine described above, several passes of the second laser beam may be required should there arise the need to process glass sheets with significant thickness.

On the other hand, in order to carry out orthogonal cuts with respect to the work surface and the glass sheet using the laser cutting machine described above, one may proceed as described above but omitting the inclination step of the operating unit 1, and therefore holding the latter in a position horizontal or parallel to the underlying work surface.

### Alternative embodiments

It is obvious that in further alternative embodiments still falling within the solution concept subject of the embodiment illustrated above and claimed below, the laser cutting machine for cutting glass sheets according to the present invention may be implemented through equivalent technical and mechanical means, with actuators of any kind suitable for the purpose, that is provided with further supplementary solutions, same case applying to all shapes of the relative components that can be varied to suit the purpose.

In particular, according to a variant of the invention outlined herein, there may be provided for, instead of the two-outlet laser generator 10 described above, two separate laser generators sequentially arranged to emit, respectively, a first laser beam to engrave the glass sheet arranged on the work surface and a second laser beam to break it, according to an orthogonal or inclined cut, at the engraving previously made by the first laser beam.

### Advantages of the invention

As observable from the preceding detailed description of a preferred embodiment and from the description outlined above relating to some embodiments, the laser cutting machine for cutting glass sheets according to the present invention offers advantages corresponding to the attainment of these and other pre-set objects.

In particular, the aforementioned laser cutting machine advantageously allows to carry out cuts on glass sheets of any shape, including curved glass sheets.

The laser cutting machine also allows to carry out, in the glass sheets, cuts with a high degree of precision, which is kept constant over time by using laser beams for carrying out the cut, which are subjected to wear contrary to the mechanical tools.

### KEY TO REFERENCE NUMBERS

1 ) operating unit
2 ) support plate
3 ) double-deck frame
3a) lower plane of the double-deck frame
3b) upper plane of the double-deck frame
4a-4d) movement devices
5a-5d) linear actuators
6a-6d) ball joints of the linear actuators
7a-7d) springs
8 ) central support
9 ) ball joint of the central support
10 ) laser generator
11a) lower outlet of the laser generator
11b) upper outlet of the laser generator
12a-12b) horizontal deviation lower mirrors
13 ) vertical deviation lower mirror
14 ) first tubular element
15 ) vertical support plate
16 ) support structure
17a-17b) horizontal deviation upper mirrors
18 ) vertical deviation upper mirror
19 ) second tubular element

## Claims

1. Laser cutting machine for cutting glass sheets, comprising:
- a work surface on which at least one glass sheet to be cut is placed in use;
- at least one laser generator (10) for generating a first laser beam for providing, in use, an engraving on said at least one glass sheet and a second laser beam for providing, in use, a cut passing through said at least one glass sheet at said engraving; wherein said at least one laser generator(10) is movable according to three orthogonal cartesian axes above said work surface, so that when said at least one laser generator (10) moves above said work surface, the first laser beam and the second laser beam jointly carry out at least one cut in said at least one glass sheet;
**characterised in that**
it comprises at least three linear actuators (5a, 5b, 5c, 5d) directly or indirectly acting on said at least one laser generator (10) and operating according to a respective movement axis substantially orthogonal to said work surface, so that upon changing the extension of said at least three linear actuators (5a, 5b, 5c, 5d) along the respective movement axis, the inclination of said laser generator (10) and said first laser beam and second laser beam changes with respect to said work surface, therefore allowing - in use - the first laser beam and the second laser beam to jointly carry out at least one cut in said at least one glass sheet according to a cutting surface oblique to said work surface.

2. Laser cutting machine according to claim **1, characterised in that** said at least three linear actuators (5a, 5b, 5c, 5d) are configured so that, moving along the respective movement axis, they produce an oscillation of said at least one laser generator (10) around an oscillation point or an oscillation axis.

3. Laser cutting machine according to claim 2, **characterised in that** said at least three linear actuators (5a, 5b, 5c, 5d) are configured so that, moving along the respective movement axis, they produce an oscillation of said at least one laser generator (10) around an oscillation point having a fixed position with respect to said at least one laser generator (10).

4. Laser cutting machine according to any one of claims 1 to 3, **characterised in that** with each linear actuator (5a, 5b, 5c, 5d) there is associated a respective joint (6a, 6b, 6c, 6d) configured to carry out a rotation substantially around a point.

5. Laser cutting machine according to any one of claims 1 to 4, **characterised in that** with each linear actuator (5a, 5b, 5c, 5d) there is associated a respective elastic member (7a, 7b, 7c, 7d).

6. Laser cutting machine according to any one of claims 1 to 5, **characterised in that** said linear actuators (5a, 5b, 5c, 5d) are four and they are arranged at the corners of a rectangle or of a square.

7. Laser cutting machine according to any one of claims 1 to 6, **characterised in that** it comprises a support member (8) for supporting, from the bottom, said at least one laser generator (10); wherein said support member (8) is arranged inside the area circumscribed by said linear actuators (5a, 5b, 5c, 5d) and it carries a joint (9) configured to carry out a rotation substantially around a point.

8. Laser cutting machine according to any one of claims 1 to 7, **characterised in that** it comprises:
- a movable portal with respect to said work surface;
- a support element (2) connected to said portal, wherein said linear actuators (5a, 5b, 5c, 5d) are arranged on said support element (2).

9. Laser cutting machine according to any one of the preceding claims, **characterised in that** said at least one laser generator (10) lies on a movable lying plane (3a), and **in that** said laser cutting machine comprise:
- at least one first mirror (12a, 12b) for diverting said first laser beam on a plane substantially parallel to said lying plane (3a);
- at least one second mirror (13) for diverting said first laser beam substantially by 90° toward said work surface;
- at least one third mirror (17a, 17b) for diverting said second laser beam on a plane substantially parallel to said lying plane (3a); and
- at least one fourth mirror (18) for diverting said second laser beam substantially by 90° toward said work surface.

10. Laser cutting machine according to claim 9, **characterised in that** it comprises:
- a first tubular element (14) containing at least two relatively movable lenses and arranged substantially orthogonal to said lying plane (3a) so as to receive, in use, the first laser beam exiting from said at least one second mirror (13) and direct it toward said at least one glass sheet arranged on said work surface; and
- a second tubular element (19) containing at least two relatively movable lenses and arranged substantially orthogonal to said lying plane (3a) so as to receive, in use, the second laser beam exiting from said at least one fourth mirror (18) and direct it toward said at least one glass sheet arranged on said work surface.

## Patentansprüche

1. Laserschnittmaschine zum Schneiden von Glasplatten, umfassend:
- eine Arbeitsfläche, auf die im Gebrauch mindestens eine zu schneidende Glasplatte gelegt wird;
- mindestens einen Lasergenerator (10) zum Erzeugen eines ersten Laserstrahls, um im Gebrauch eine Gravur auf der mindestens einen Glasplatte bereitzustellen, und eines zweiten Laserstrahls, um im Gebrauch einen Schnitt zu erzeugen, der an der Gravur durch die mindestens eine Glasplatte verläuft; wobei der mindestens eine Lasergenerator (10) entlang von drei orthogonalen kartesischen Achsen über der Arbeitsfläche bewegbar ist, sodass, wenn sich der mindestens eine Lasergenerator (10) über die Arbeitsfläche bewegt, der erste Laserstrahl und der zweite Laserstrahl gemeinsam mindestens einen Schnitt in der mindestens einen Glasplatte durchführen;
**dadurch gekennzeichnet, dass**
sie mindestens drei Linearaktuatoren (5a, 5b, 5c, 5d) umfasst, die direkt oder indirekt auf den mindestens einen Lasergenerator (10) wirken und entlang einer jeweiligen Bewegungsachse im Wesentlichen orthogonal zu der Arbeitsfläche betrieben werden, sodass sich bei einer Änderung der Erstreckung der mindestens drei Linearaktuatoren (5a, 5b, 5c, 5d) entlang der jeweiligen Bewegungsachse die Neigung des Lasergenerators (10) und des ersten und des zweiten Laserstrahls in Bezug auf die Arbeitsfläche ändert, wodurch im Gebrauch ermöglicht wird, dass der erste Laserstrahl und der zweite Laserstrahl gemeinsam mindestens einen Schnitt in der mindestens einen Glasplatte gemäß einer zu der Arbeitsfläche schrägen Schneidfläche durchführen.

2. Laserschnittmaschine nach Anspruch 1, **dadurch gekennzeichnet, dass** mindestens drei Linearaktuatoren (5a, 5b, 5c, 5d) konfiguriert sind, sodass sie bei einer Bewegung entlang der jeweiligen Bewegungsachse ein Schwenken des mindestens einen Lasergenerators (10) um einen Schwenkpunkt oder eine Schwenkachse erzeugen.

3. Laserschnittmaschine nach Anspruch 2, **dadurch gekennzeichnet, dass** mindestens drei Linearaktuatoren (5a, 5b, 5c, 5d) konfiguriert sind, sodass sie bei einer Bewegung entlang der jeweiligen Bewegungsachse ein Schwenken des mindestens einen Lasergenerators (10) um einen Schwenkpunkt erzeugen, der eine feste Position in Bezug auf den mindestens einen Lasergenerator (10) aufweist.

4. Laserschnittmaschine nach einem der Ansprüche 1 bis 3, **dadurch gekennzeichnet, dass** mit jedem Linearaktuator (5a, 5b, 5c, 5d) ein entsprechendes Gelenk (6a, 6b, 6c, 6d) assoziiert ist, das konfiguriert ist, um eine Drehung im Wesentlichen um einen Punkt durchzuführen.

5. Laserschnittmaschine nach einem der Ansprüche 1 bis 4, **dadurch gekennzeichnet, dass** mit jedem Linearaktuator (5a, 5b, 5c, 5d) ein jeweiliges elastisches Element (7a, 7b, 7c, 7d) assoziiert ist.

6. Laserschnittmaschine nach einem der Ansprüche 1 bis 5, **dadurch gekennzeichnet, dass** die Linearaktuatoren (5a, 5b, 5c, 5d) vier an der Zahl sind und sie an den Ecken eines Rechtecks oder Quadrats angeordnet sind.

7. Laserschnittmaschine nach einem der Ansprüche 1 bis 6, **dadurch gekennzeichnet, dass** sie ein Tragelement (8) zum Tragen des mindestens einen Lasergenerators (10) von unten umfasst; wobei das Tragelement (8) innerhalb des Bereichs angeordnet ist, der von den Linearaktuatoren (5a, 5b, 5c, 5d) umschlossen ist, und ein Gelenk (9) trägt, das konfiguriert ist, um eine Drehung im Wesentlichen um einen Punkt durchzuführen.

8. Laserschnittmaschine nach einem der Ansprüche 1 bis 7, **dadurch gekennzeichnet, dass** sie Folgendes umfasst:
- ein in Bezug auf die Arbeitsfläche bewegbares Portal;
- ein Tragelement (2), das mit dem Portal verbunden ist, wobei die Linearaktuatoren (5a, 5b, 5c, 5d) an dem Tragelement (2) angeordnet sind.

9. Laserschnittmaschine nach einem der vorherigen Ansprüche, **dadurch gekennzeichnet, dass** der mindestens eine Lasergenerator (10) auf einer bewegbaren Auflageebene (3a) liegt und dass die Laserschnittmaschine Folgendes umfasst:
- mindestens einen ersten Spiegel (12a, 12b) zum Ablenken des ersten Laserstrahls auf einer Ebene im Wesentlichen parallel zu der Auflageebene (3a);
- mindestens einen zweiten Spiegel (13) zum Ablenken des ersten Laserstrahls im Wesentlichen um 90° in Richtung der Arbeitsfläche;
- mindestens einen dritten Spiegel (17a, 17b) zum Ablenken des zweiten Laserstrahls auf einer Ebene im Wesentlichen parallel zu der Auflageebene (3a); und
- mindestens einen vierten Spiegel (18) zum Ablenken des zweiten Laserstrahls im Wesentlichen um 90° in Richtung der Arbeitsfläche;

10. Laserschnittmaschine nach Anspruch 9, **dadurch gekennzeichnet, dass** sie Folgendes umfasst:
- ein erstes rohrförmiges Element (14), das mindestens zwei relativ bewegbare Linsen enthält und im Wesentlichen orthogonal zu der Auflageebene (3a) angeordnet ist, um im Gebrauch den ersten Laserstrahl aufzunehmen, der aus dem mindestens einen zweiten Spiegel (13) austritt, und ihn auf die mindestens eine Glasplatte zu richten, die auf der Arbeitsfläche angeordnet ist; und
- ein zweites rohrförmiges Element (19), das mindestens zwei relativ bewegbare Linsen enthält und im Wesentlichen orthogonal zu der Auflageebene (3a) angeordnet ist, um im Gebrauch den zweiten Laserstrahl aufzunehmen, der aus dem mindestens einen vierten Spiegel (18) austritt, und ihn auf die mindestens eine Glasplatte zu richten, die auf der Arbeitsfläche angeordnet ist.

## Revendications

1. Machine à découper au laser destinée à découper des feuilles de verre, comprenant :
une surface de travail sur laquelle est posée, pendant l'utilisation, au moins une feuille de verre à découper ;
au moins un générateur laser (10) destiné à générer un premier faisceau laser pour réaliser, pendant le fonctionnement, une gravure sur ladite au moins une feuille de verre, et un deuxième faisceau laser pour réaliser, pendant le fonctionnement, une découpe traversant ladite au moins une feuille de verre au niveau de ladite gravure ; dans lequel ledit au moins un générateur laser (10) est mobile selon trois axes cartésiens orthogonaux au-dessus de ladite surface de travail, de sorte que, lorsque ledit au moins un générateur laser (10) se déplace au-dessus de ladite surface de travail, le premier faisceau laser et le deuxième faisceau laser réalisent conjointement au moins une découpe sur ladite au moins une feuille de verre ;
**caractérisée en ce qu'**elle
comprend au moins trois actionneurs linéaires (5a, 5b, 5c, 5d) agissant directement ou indirectement sur ledit au moins un générateur laser (10) et fonctionnant selon un axe de déplacement respectif sensiblement orthogonal à ladite surface de travail, de sorte que, lorsque l'extension desdits au moins trois actionneurs linéaires (5a, 5b, 5c, 5d) varie le long de l'axe de déplacement respectif, l'inclinaison dudit générateur laser (10) et desdits premier et deuxième faisceaux laser varie par rapport à ladite surface de travail, permettant ainsi, pendant l'utilisation, au premier faisceau laser et au deuxième faisceau laser d'effectuer conjointement au moins une découpe sur ladite au moins une feuille de verre selon une surface de découpe oblique par rapport à ladite surface de travail.

2. Machine à découper au laser selon la revendication 1, **caractérisée en ce que** lesdits au moins trois actionneurs linéaires (5a, 5b, 5c, 5d) sont configurés de telle sorte que, en se déplaçant le long de leur axe de déplacement respectif, ils provoquent une oscillation dudit au moins un générateur laser (10) autour d'un point d'oscillation ou d'un axe d'oscillation.

3. Machine à découper au laser selon la revendication 2, **caractérisée en ce que** lesdits au moins trois actionneurs linéaires (5a, 5b, 5c, 5d) sont configurés de telle sorte que, en se déplaçant le long de leur axe de déplacement respectif, ils provoquent une oscillation dudit au moins un générateur laser (10) autour d'un point d'oscillation ayant une position fixe par rapport audit au moins un générateur laser (10).

4. Machine à découper au laser selon l'une quelconque des revendications 1 à 3, **caractérisée en ce qu'**à chaque actionneur linéaire (5a, 5b, 5c, 5d) est associée une articulation respective (6a, 6b, 6c, 6d) configurée pour effectuer une rotation sensiblement autour d'un point.

5. Machine à découper au laser selon l'une quelconque des revendications 1 à 4, **caractérisée en ce qu'**à chaque actionneur linéaire (5a, 5b, 5c, 5d) est associé un élément élastique respectif (7a, 7b, 7c, 7d).

6. Machine à découper au laser selon l'une quelconque des revendications 1 à 5, **caractérisée en ce que** lesdits actionneurs linéaires (5a, 5b, 5c, 5d) sont au nombre de quatre et sont disposés aux coins d'un rectangle ou d'un carré.

7. Machine de découpe au laser selon l'une quelconque des revendications 1 à 6, **caractérisée en ce qu'**elle comprend un élément de support (8) destiné à supporter, par le dessous, ledit au moins un générateur laser (10) ; dans laquelle ledit élément de support (8) est disposé à l'intérieur de la zone circonscrite par lesdits actionneurs linéaires (5a, 5b, 5c, 5d) et porte une articulation (9) configurée pour effectuer une rotation sensiblement autour d'un point.

8. Machine à découper au laser selon l'une quelconque des revendications 1 à 7, **caractérisée en ce qu'**elle comprend :
un portique mobile par rapport à ladite surface de travail ;
un élément de support (2) relié audit portique, dans lequel lesdits actionneurs linéaires (5a, 5b, 5c, 5d) sont disposés sur ledit élément de support (2).

9. Machine à découper au laser selon l'une quelconque des revendications précédentes, **caractérisée en ce que** ledit au moins un générateur laser (10) repose sur un plan d'appui mobile (3a), et **en ce que** ladite machine à découper au laser comprend :
- au moins un premier miroir (12a, 12b) destiné à dévier ledit premier faisceau laser sur un plan sensiblement parallèle audit plan d'appui (3a) ;
- au moins un deuxième miroir (13) destiné à dévier ledit premier faisceau laser de sensiblement 90° vers ladite surface de travail ;
- au moins un troisième miroir (17a, 17b) destiné à dévier ledit premier faisceau laser sur un plan sensiblement parallèle audit plan d'appui (3a) ;
- au moins un quatrième miroir (18) destiné à dévier ledit premier faisceau laser de sensiblement 90° vers ladite surface de travail.

10. Machine à découper au laser selon la revendication 9, **caractérisée en ce qu'**elle comprend :
un premier élément tubulaire (14) contenant au moins deux lentilles mobiles l'une par rapport à l'autre et disposé de manière sensiblement orthogonale audit plan d'appui (3a) de manière à recevoir, pendant le fonctionnement, le premier faisceau laser sortant dudit au moins un deuxième miroir (13) et à le diriger vers ladite au moins une feuille de verre disposée sur ladite surface de travail ; et
un deuxième élément tubulaire (19) contenant au moins deux lentilles relativement mobiles l'une par rapport à l'autre et disposé de manière sensiblement orthogonale audit plan d'appui (3a) de manière à recevoir, pendant le fonctionnement, le deuxième faisceau laser sortant dudit au moins un quatrième miroir (18) et à le diriger vers ladite au moins une feuille de verre disposée sur ladite surface de travail.
